# NEUE EUROPÄISCHE PATENTSCHRIFT

(11) **EP 2 492 111 B2**
(45) Veröffentlichungstag und Bekanntmachung des Hinweises auf die Entscheidung über den Einspruch: **25.12.2019**
(45) Hinweis auf die Patenterteilung: 12.06.2013
(21) Anmeldenummer: 12001138.2
(22) Anmeldetag: 21.02.2012
(51) Int. Cl.: B60B 5/02, B29C 70/22, B29C 70/38

(54) **VERFAHREN ZUM HERSTELLEN EINER FELGE SOWIE FAHRRADFELGE.**
METHOD FOR PRODUCING A RIM AS WELL AS BICYCLE RIM.
PROCÉDÉ DE FABRICATION D'UNE JANTE AINSI QUE JANTE DE VÉLO.

(30) Priorität: 28.02.2011 DE 102011012675
(43) Veröffentlichungstag der Anmeldung: 29.08.2012
(73) Patentinhaber: Munich Composites GmbH, 82024 Taufkirchen (DE)
(72) Erfinder: Rüger, Olaf, 85573 Markt Schwaben (DE); Fröhlich, Felix, 85774 Unterföhring (DE)
(74) Vertreter: Winter, Brandl, Fürniss, Hübner, Röss, Kaiser, Polte - Partnerschaft mbB

(56) Entgegenhaltungen:
- WO-A1-2005/098117
- WO-A1-2011/096805
- DE-A1-102010 010 513
- FR-A- 361 387
- JP-A- 60 118 579
- US-A1- 2005 042 109

## Beschreibung

Die Erfindung betrifft ein Verfahren zum Herstellen einer Roh-Felge für ein Laufrad eines Fahrzeugs. Ferner betrifft die Erfindung eine Fahrradfelge, die nach dem erfindungsgemäßen Verfahren hergestellt ist.

Flechtvorrichtungen, mit denen Faserverbundbauteile hergestellt werden, sind aus dem Stand der Technik bekannt. So bietet die Firma August Herzog Maschinenfabrik GmbH & Co.KG zahlreiche Flechtvorrichtungen an, also Vorrichtungen mit denen geflochten wird.

Auch ist seit Mitte der 1980er Jahre bekannt, Faserverbundfahrradfelgen herzustellen. Es gibt diesbezüglich zahlreiche Patente und Patentanmeldungen, auf die verwiesen werden soll. Dies sind u.a. die US 5061013, die US 7651654 und die US 7614706.

Derzeit werden Fahrradfelgen aus Kohlenstofffasern, auch Kohlefasern oder Carbon-Fasern genannt, in aufwändiger Handarbeit produziert. Die meisten Felgen werden aus vorimprägnierten Kohlenstofffasergeweben, sog. Pre-Pregs hergestellt. Hierbei werden die erzeugten Matten in die gewünschte Endform zugeschnitten und von Hand auf einen Kern aufgelegt. Die Matten enthalten die Kohlenstofffasern. Die Aushärtung erfolgt in einer geschlossenen Form oder unter einer Vakuumfolie.

Alternativ werden auch trockene Halbzeuge verwendet. Wie auch Pre-Pregs werden diese zugeschnitten und von Hand auf einen Kern aufgelegt. In einem zusätzlichen Arbeitsschritt muss nun noch das Harz in das Halbzeug eingebracht werden. Dies geschieht meist durch Handauftrag oder Injektion.

Gewisse Neuerungen sind vorwiegend im Bereich der Anwendung der Speichen, in der Gestaltung des Bremsbereiches, etwa unter Hinzunahme von Verstärkungslagen, Kernverstärkungen oder zusätzlichen Ringen aus Metall oder anderen Materialien, Zwickelfüllern bei mehreren Teilkammern und Einbringung zu Verschleißindikation zu erkennen. Die Herstellungsverfahren sind jedoch bisher hauptsächlich durch Handarbeit gekennzeichnet, wodurch hohe Kosten entstehen. Diese versucht man dann wiederum zu senken, indem in sog. Billiglohnländern, wie z.B. Taiwan und China, die Fertigung durchgeführt wird. Leider kommt es dann häufig zu einer hohen Qualitätsstreuung. Gefahr besteht bspw. beim Verrutschen von einzelnen Lagen, Vergessen von Lagen und ungewolltem Eindringen von Fremdkörpern, wie z.B. von Folien.

Die aus dem Stand der Technik bekannte Flechttechnik, wie z.B. aus der DE 10 2005 041940 A1, ist ein relativ neues Verfahren zur automatisierten Fertigung von Faserverbundbauteilen. Dazu werden Flechtmaschinen mit Verstärkungsfasern besetzt und während des Flechtprozesses ein formgebender Kern durch den Flechtmittelpunkt geführt. Hierbei legt sich das Geflecht auf dem Kern ab, so dass eine Pre-Form, oder auch Vorform genannt, des Bauteils hergestellt wird. Für die Fertigstellung des Bauteils wird diese Pre-Form in einem nachfolgenden Arbeitsschritt mit Harz injiziert.

Die DE 10 2005 041940 A1 offenbart bspw. eine Radfelge mit einem Felgenbett mit einem äußeren und einem inneren Felgenhorn und einer Felgennabe, einem Felgenstern oder einer Felgenscheibe, bestehend aus einem zur Infiltration geeigneten Matrixmaterial, das eine textile Verstärkung aufweist, wobei ein Flechtschlauch mit einem Mittel zu dessen Fixierung die textile Verstärkung bildet, und die gesamte Radgeometrie vom Flechtschlauch unterbrechungsfrei durchzogen ist. Die einzelnen Fasern, die zur Verstärkung eingesetzt werden, verlaufen jedoch in radialer Richtung und sind auf der Außenseite der Radfelge unterbrochen.

Diese Radfelge hat den Nachteil, dass die Fasern auf zumindest einer der beiden umlaufenden Flächen unterbrochen sind. Dadurch kann keine optimale Kraftübertragung der Felge erreicht werden.

Benachbarter Stand der Technik ist auch aus der gattungsgemäßen WO 2011/096805 A1, der FR 361387 A und der DE 10 2010 010 513 A1 bekannt.

Es ist die Aufgabe der vorliegenden Erfindung, hier eine Verbesserung zu bieten. So soll einerseits mittels Automatisierung eine gleichbleibende Qualität an Faserverbundbauteilen erreichbar sein, wobei die Kosten reduziert werden, und zusätzlich noch eine höhere Steifigkeit bei geringerem Gewicht erzielt werden soll.

Diese Aufgabe wird durch ein Verfahren nach Anspruch 1 und eine Fahrradfelge nach Anspruch 7 gelöst.

Die Erfindung hat den Vorteil, dass eine automatisierte Fertigung, z.B. von Fahrradfelgen, möglich wird. Die somit entstandenen Vorteile sind im Folgenden in mechanische Vorteile und betriebswirtschaftliche Vorteile unterteilt.

Unter mechanischen Vorteilen werden die folgenden Vorteile als besonders wertvoll aufgefasst:

Durch die Variabilität der Drehzahl der Spulen und des Felgenkerns kann die Ablage des Faserwinkels eingestellt werden. Somit können unterschiedliche Anforderungen, etwa für Rennräder, City- oder Mountain Bikes, unterschiedliche Flechtwinkel realisiert werden. Desweiteren ist es nur mit dieser Technik möglich, den Faserablagewinkel entlang der Felge exakt konstant und reproduzierbar zu halten.

Bei Fahrradfelgen kommen heute meist kohlestofffaserverstärkte Epoxidharze zum Einsatz. Durch die Verstärkungsfasern erreichen diese extrem hohe Festigkeiten und Steifigkeiten. Mit dem jetzigen Verfahren ist es jedoch nicht möglich, die Fasern bei geschlossenen Profilen durchgängig abzulegen. Dies wird durch ein erfindungsgemäßes Verfahren. Mit Hilfe der Flechttechnik ergibt sich eine Ablage vom umlaufenden Fasern auf den Flechtkern, womit bessere mechanische Kennwerte im Vergleich zu herkömmlich hergestellten Carbon-Fahrradfelgen erzielt werden.

Bei herkömmlichen Fertigungsverfahren werden vorgefertigte Gewebe verarbeitet. Es ist somit nicht möglich, lokal die Gewebe zu verstärken. Mit der Flechttechnik lassen sich mehrere und/oder stärkere 0°-Fäden (Stehfäden)an den gewünschten, hochbeanspruchten Stellen einbringen. Es ist außerdem möglich, unterschiedliche Fasern und Materialien in den jeweiligen Bereichen einzubringen. So sind Kombinationen aus Carbon-, Glas- und Aramidfasern möglich.

Desweiteren bieten umlaufende Geflechte im Vergleich zu Bauteilen, die aus Gewebematten aufgebaut sind, bessere Schadenstoleranzen. Durch die Verflechtung von drei Faserrichtungen ist ein stärkerer Zusammenhalt gegeben, als bei der Ablage von einzelnen Lagen übereinander. Diese Eigenschaften sind vor allem bei extremen Stoßlasten, wie bei dem schnellen Befahren von Bordsteinen oder bei Unfällen vorteilhaft.

Die aufwändige Handarbeit beim jetzigen Stand der Technik ist zum einen teuer in der Fertigung, zum anderen ist eine Qualitätskontrolle sehr schwer realisierbar. Die Qualität der bisherigen Produkte hängt somit stark von der Laune und Tagesform des jeweiligen Werkers ab. Die Flechttechnik gemäß der Erfindung bietet die Möglichkeit, den Ablageprozess vollständig zu automatisieren. Somit kann die Reproduzierbarkeit sichergestellt werden und dem Kunden eine gleichmäßig hohe Qualität garantiert werden.

Unter den betriebswirtschaftlichen Vorteilen lassen sich die folgenden Punkte subsummieren:

Heute werden zur Herstellung von Fahrradfelgen Matten aus Kohlenstofffaser-Rovingen benutzt. Bei der Herstellung mittels der Flechttechnik werden die Kohlestofffaser-Rovings direkt verwendet. Es fällt somit ein Zwischenschritt in der Herstellung vom Rohmaterial zum Bauteil weg, was den Prozess kostengünstiger macht. Außerdem kann mit der Umflechttechnik nahezu verschnittfrei ohne Abfall produziert werden. Dies hat sowohl positive Auswirkungen auf die Wettbewerbsfähigkeit, als auch auf die Umweltbilanz.

Desweiteren ist der Anfangsinvest in eine Flechtmaschine mit ca. 100.000 Euro bis 200.000 Euro im Vergleich zu Maschinen, die Gewebe herstellen, relativ gering.

Die Produktivität von Flechtmaschinen ist auf der anderen Seite sehr hoch. Es werden je nach Größe der Flechtmaschinen über 60 bis 80 Fäden gleichzeitig abgelegt. Somit wird die Herstellung in der Pre-Form auf ca. zwei bis drei Minuten geschätzt, wohingegen mehrere Stunden benötigt werden, um die Pre-Form von Hand aufzubauen. Das gleiche gilt für die manuelle Ablage mit Pre-Pregs. Pre-Pregs sind mit Harz vorimpregnierte Rovings, Gelege oder Gewebe. Bei der Verarbeitung von Pre-Pregs kann auf einen nachfolgenden Infiltrationsprozess verzichtet werden.

Des Weiteren bietet die Flechttechnik die Möglichkeit das Harz bereits im Roving integriert zu verarbeiten. Sog. Pre-Preg Rovings auf Epoxid oder Thermoplast Basis beinhalten bereits das notwendige Harz und ermöglichen die Herstellung eines Bauteils lediglich durch das Aufbringen von Druck und Temperatur.

Desweiteren bietet die Flechttechnik die Möglichkeit, den Prozess vollständig zu automatisieren. So können die Kosten für die Fertigung gesenkt werden. Auch ist die Fertigung somit in Zukunft weit weniger Handarbeit dominiert, womit sich eine Fertigung in den Industrieländern finanziell lohnen würde. Hiervon kann auch das Produkt durch schnellere Innovationssprünge profitieren.

Vorteilhafte Ausführungsformen sind in den Unteransprüchen beansprucht und werden nachfolgend näher erläutert.

So ist es von Vorteil, wenn der erste Ringabschnitt zwei sich kreuzende Führungsbahnen für die Spulen aufweist, die in korrespondierende Führungsbahnen des zweiten Ringabschnittes übergehen. Die Spulen, die auch als Klöppel bezeichnet werden, können somit auf der Innenseite des Ringes komplett umlaufen. Andererseits ist die Teilbarkeit des Ringes gewährleistet, um das fertige Roh-Produkt, entnehmen zu können.

Um die Entnahme des Roh-Produktes zu erleichtern, ist es von Vorteil, wenn das Schwenkgelenk auf der Außenseite des Ringes in einer horizontal durch den Mittelpunkt des Ringes verlaufenden Trennungsebene an dem ersten und zweiten Ringabschnitt befestigt ist. Alternativ können auch beide Hälften der Flechtmaschine auf Schienen verschiebbar gelagert werden. Hierdurch entsteht eine konstruktiv einfach umsetzbare Möglichkeit zur Öffnung des Flechtrumpfes.

Ferner ist es vorteilhaft, wenn zumindest vier Spulen, vorzugsweise sogar 80 Spulen, vorhanden sind. Es sind auch höhere Spulenanzahlen, insbesondere 180 Spulen möglich.

Es ist von Vorteil, wenn eine Felge mit einer solchen Flechtvorrichtung hergestellt wird, insbesondere eine solche, die Verstärkungsfasern einer Gruppe aus Kohlefasern, Aramidfasern oder Glasfasern aufweist. Auch Kombinationen in der einzelnen Faser sind möglich.

Vorteilhafte Ausführungsformen des Verfahrens sind dadurch gekennzeichnet, dass der Flechtkern eine ringförmige Struktur aufweist und aus einem Schaumwerkstoff oder einem aufblasbaren Material gebildet wird. Der Schaumwerkstoff hat den Vorteil, dass er nur sehr unwesentlich zum weiteren Gewicht des später erzielten fertigen Produktes, also der Felge, beiträgt. Ausschmelzbare und auslösbare Werkstoffe wie Wachs und Eis haben den Vorteil, dass sie komplett aus dem Bauteil entfernbar sind..

Wenn der Flechtkern in seiner Umfangsrichtung rotiert wird, so bewegt sich immer ein neuer Abschnitt des Flechtkerns durch den Mittelpunkt der Flechtvorrichtung, so dass der Flechtkern allseitig von Verstärkungsfasern in seiner Umfangsrichtung bedeckt wird. Eine durchgehende strumpfartige Lage aus Verstärkungsfasern kann erreicht werden.

Bei mehrmaligem Durchlauf des Flechtkerns werden mehrere Lagen erreicht.

Damit ein ringförmiges Bauteil nach der Umflechtung mit Verstärkungsfasern entnehmbar ist, ist es von Vorteil, wenn das ringförmige Führungsbauteil aufgeklappt wird, um den mit Verstärkungsfasern umflochtenen Kern zu entnehmen. Zu diesem Zeitpunkt müssen auch die Verstärkungsfasern gekappt werden.

Es ist von Vorteil, wenn der umflochtene Kern in eine Form gelegt wird, mit Harz von außen beaufschlagt wird, das Harz ausgehärtet wird, und eine Roh-Felge nach dem Öffnen der Form entnommen wird. Dabei ist es von Vorteil, wenn die Temperatur und/oder der Druck in der Form kurzzeitig erhöht werden. Auf diese Welse wird eine belastbare Roh-Felge erreicht.

Wenn die Roh-Felge spanend nachbehandelt wird, so können evtl. überstehende Harzreste entfernt werden und ein attraktives Ergebnis erreicht werden. Weiterhin ist es möglich den Kern direkt mit getränkten Verstärkungsfasern zu formen, wobei auf eine nachfolgende Harzeinbringung verzichtet werden kann. Eine weitere Möglichkeit bietet die Verwendung von thermoplastbasierten Matrices. Hierbei wird durch den Flechtprozess bereits das notwendige Harz eingebracht und so kann durch ledigliches Aufbringen von Druck und Temperatur ein Bauteil hergestellt werden.

Die Erfindung wird auch mit Hilfe einer Zeichnung näher erläutert, die eine erste Flechtvorrichtung schematisch darstellt.

So zeigen:
- Fig. 1: eine Frontansicht der Flechtvorrichtung mit eingelegtem Flechtkern und
- Fig. 2: eine Draufsicht auf die Flechtvorrichtung gemäß Fig. 1.

Die Figuren sind lediglich schematischer Natur und dienen ausschließlich dem Verständnis der Erfindung.

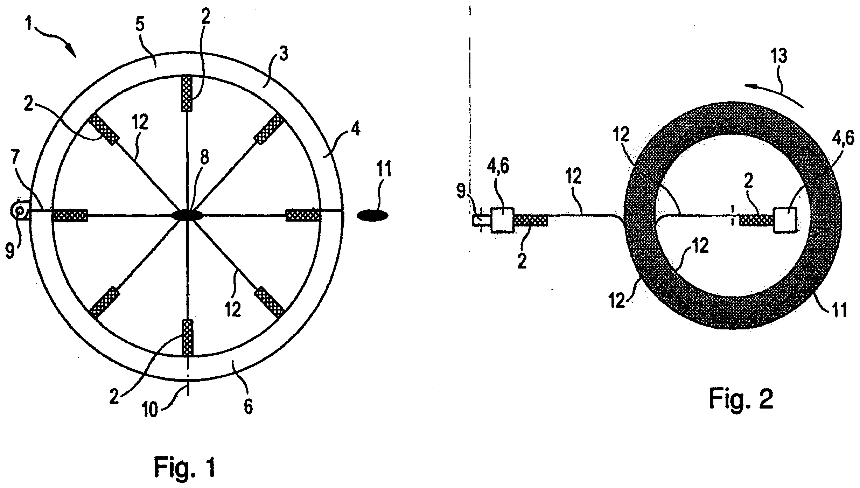

In Fig. 1 ist eine Flechtvorrichtung 1 dargestellt. Die Flechtvorrichtung 1 weist Spulen 2 auf, die auf der Innenseite eines Führungsbauteils 3 angeordnet sind. Das Führungsbauteil 3 ist als Ring 4 ausgebildet. Der Ring 4 ist aus einem metallischen Bauteil, insbesondere aus einem eisenhaltigen Werkstoff, wie Stahl gefertigt. Der Ring 4 weist einen ersten Ringabschnitt 5 und einen zweiten Ringabschnitt 6 auf. Die beiden Ringabschnitte 5 und 6 sind entlang einer Trennungsebene 7, die durch einen Mittelpunkt 8 des Ringes 4 verläuft, getrennt. Auf einer Seite des Rings 4 sind die beiden Ringabschnitte 5 und 6 durch ein Schwenkgelenk 9 miteinander verbunden.

Die Spulen 2, die von Klöppeln geführt werden, sind um ihre Längsachse 10 rotierbar auf der Innenseite des Ringes 4 angeordnet. Die Spulen 2 rotieren um den Mittelpunkt 8, sobald ein Flechtkern 11 durch den Mittelpunkt 8 geführt wird.

Die Spulen 2 sind dabei in zumindest zwei sich kreuzenden wellenförmigen Bahnen auf der Innenseite des Ringes 4 geführt.

Die Spulen 2 sind motorisch, vorzugsweise elektromotorisch angetrieben.

Der Flechtkern 11 weist einen geschlossenen Querschnitt auf und ist ringförmig ausgebildet. Der Flechtkern 11 wird beim Durchführen durch den Mittelpunkt 8 von den Spulen 2 umkreist. Auf den Spulen 2 sind Verstärkungsfasern 12 aufgewickelt, die sich dabei abwickeln.

Die Verstärkungsfasern 12 sind Glasfaser-, Aramidfaser- und/oder Kohlefaserverstärkungsfasern.

Der Flechtkern 11 wird entlang seiner Umfangsrichtung 13, die in Fig. 2 mit einem entsprechenden Pfeil gekennzeichnet ist, durch das Innere des Ringes 4 hindurchgeführt. Dabei wird die Außenseite des Flechtkerns 11 von der Verstärkungsfaser 12 umflochten. Mehrere der Verstärkungsfasern 12 kreuzen sich damit. In Abhängigkeit von der Vorschubgeschwindigkeit des Flechtkerns 11 und der Geschwindigkeiten der Spulen 2 um den Flechtkern 11 herum, stellen sich entsprechende Winkellagen der Verstärkungsfasern 12 zueinander und zum Flechtkern 11 ein.

Die Rotationsachse, um die der Flechtkern 11 rotiert, ist im Regelfall innerhalb des Ringes 4 partiell angeordnet, wobei jedoch nur das Kollidieren mit dem Ring 4 zu vermeiden ist.

In Fig. 2 ist eine Draufsicht auf die Flechtvorrichtung 1 dargestellt, wobei der erste Ringabschnitt 5 nicht dargestellt ist.

Als Neuerung der Erfindung gegenüber dem Stand der Technik ist insbesondere der um den Querschnitt umlaufende, durchgängige Faserverlauf zu sehen. Bei Faserverbundwerkstoffen halten die Fasern bedeutend höhere Lasten als der Matrixwerkstoff, daher ist bei der Auslegung und Herstellung von Faserverbundbauteilen ein durchgängiger Faserverlauf von erheblichem Vorteil. Des Weiteren besteht die Möglichkeit der vollständigen Automatisierung dieses Ablegeverfahrens. Somit lassen sich Roh-Felgen und daraus gefertigte Felgen in Zukunft kostengünstiger und vor allem reproduzierbarer fertigen, was einen Eintritt dieses neuen Werkstoffes in den Massenmarkt ermöglicht.

## Patentansprüche

1. Verfahren zum Herstellen einer Roh-Felge für ein Laufrad eines Fahrzeuges, wobei Spulen (2) mit darauf aufgewickelten Verstärkungsfasern (12) um einen Mittelpunkt (8) eines Kreises rotiert werden, wobei sich die Spulen (2) in wellenförmigen Führungsbahnen auf der Innenseite eines Führungsbauteils (3) äquidistant zum Mittelpunkt (8) auf einer Wellenbahn bewegen, wobei ferner ein Flechtkern (11) durch den Mittelpunkt (8) geführt wird, der bei gleichzeitigem Umlaufen der Spulen (2) um den Mittelpunkt (8) von den sich abwickelnden Verstärkungsfasern (12) umflochten wird, wobei das ringförmige Führungsbauteil (3) aufgeklappt oder aufgeschoben wird, um den mit Verstärkungsfasern (12) umflochtenen Kern (11) zu entnehmen, wobei 0°-Fasern eingebracht sind und eine triaxiale Faserausrichtung in einer Faserlage erreicht wird.

2. Verfahren nach Anspruch 1 , **dadurch gekennzeichnet, dass** der Flechtkern (11) eine ringförmige Struktur aufweist und aus einem Schaumwerkstoff und/oder aus auslösbaren oder ausschmelzbaren Werkstoffen gebildet wird.

3. Verfahren nach Anspruch 1 oder 2 , **dadurch gekennzeichnet, dass** der Flechtkern (11) in seiner Umfangsrichtung rotiert wird.

4. Verfahren nach einem der Ansprüche 1 bis 3 , **dadurch gekennzeichnet, dass** der Flechtkern (11) mit Verstärkungsfasern (12) der Gruppe aus Kohlefasern, Aramidfasern und Glasfasern umflochten wird, so dass die Verstärkungsfasern (12) entlang des Umfangs des Flechtkerns abgelegt werden und/oder in Form von mehreren Verstärkungsfaserlagen durchgängig entlang der Vorschubrichtung bezogen auf den Ring abgelegt werden.

5. Verfahren nach einem der Ansprüche 1 bis 4 , **dadurch gekennzeichnet, dass** die Verstärkungsfasern (12) umlaufend und durchgängig bezogen auf den Ringquerschnitt abgelegt werden.

6. Verfahren nach einem der Ansprüche 1 bis 5 , **dadurch gekennzeichnet, dass** die Spulen (2) in einem aufklappbaren Führungsbauteil (3) rotieren oder in einen über ein Schienensystem auffahrbaren Führungsbauteil (3) rotieren.

7. Fahrradfelge, hergestellt nach dem Verfahren gemäß einem der Ansprüche 1 bis 6 , wobei der umflochtene Kern (11) in eine Form gelegt wird, mit Harz vorteilhafterweise von außen beaufschlagt wird, das Harz ausgehärtet wird und eine Roh-Felge nach dem Öffnen der Form entnommen wird, wobei vorzugsweise die ausgehärtete Roh-Felge spanend nachbehandelt wird.

8. Fahrradfelge nach Anspruch 7, **dadurch gekennzeichnet, dass** die Felge mit vorimprägnierten Rovings, Pre-Pregs oder vorkonsolidierten Thermoplastbändchen direkt ohne zusätzliche Herstellung eines flächigen Halbzeuges gefertigt ist.

## Claims

1. A method of manufacturing a raw rim for a wheel of a vehicle, wherein coils (2) having reinforcing fibers (12) wound thereon are rotated about a center (8) of a circle, wherein the coils (2) move equidistantly to the center (8) on a wave track in wave-shaped guideways provided on the inner side of a guiding unit (3), wherein, in addition, a braiding core (11) is guided through the center (8), said braiding core (11) being braided with the reinforcing fibers (12) that unwind from the coils (2) when said coils (2) circulate simultaneously around the center (8), wherein the ring-shaped guiding unit (3) is pivotally or translationally opened for removing the core (11) braided with the reinforcing fibers (12), wherein 0°-fibers are inserted and a triaxial fiber orientation is accomplished in a fiber layer.

2. A method according to claim 1, **characterized in that** the braiding core (11) has a ring-shaped structure and is formed from a foamed material and/or from materials that can be removed by releasing or melting processes.

3. A method according to claim 1 or 2, **characterized in that** the braiding core (11) is rotated in its circumferential direction.

4. A method according to one of the claims 1 to 3, **characterized in that** the braiding core (11) is braided with reinforcing fibers (12) from the group of carbon fibers, aramide fibers or glass fibers so that the reinforcing fibers (12) are deposited along the circumference of the braiding core and/or are deposited in the form of a plurality of reinforcing fiber layers continuously along the advance direction in relation to the ring.

5. A method according to one of the claims 1 to 4, **characterized in that** the reinforcing fibers (12) are deposited circulatorily and continuously in relation to the cross-section of the ring.

6. A method according to one of the claims 1 to 5, **characterized in that** the coils (2) rotate in a pivotally openable guiding unit (3) or rotate in a guiding unit (3) that is translationally openable via a rail system.

7. A bicycle rim, manufactured according to the method disclosed in one of the claims 1 to 6, wherein the braided core (11) is put in a mold and has resin applied thereto, preferably from outside, the resin is cured and a raw rim is removed from the mold when the latter has been opened, the cured raw rim being preferably subjected to an after-treatment by machining.

8. A bicycle rim according to claim 7, **characterized in that** the rim is fabricated with preimpregnated rovings, prepregs or preconsolidated thermoplastic ribbons, directly and without producing a planar semifinished product.

## Revendications

1. Procédé servant à fabriquer une jante brute pour une roue de roulement d'un véhicule, dans lequel des bobines (2) avec des fibres de renforcement (12) enroulées sur celles-ci sont mises en rotation autour d'un point central (8) d'un cercle, dans lequel les bobines (2) se déplacent dans des pistes de guidage de forme ondulée sur le côté interne d'un composant de guidage (3) à équidistance du point central (8) sur une piste ondulée, dans lequel en outre un noyau de tressage (11) est guidé à travers le point central (8), lequel est tressé lors de la rotation simultanée des bobines (2) autour du point central (8), par des fibres de renforcement (12) se déroulant, dans lequel le composant de guidage (3) de forme annulaire est déplié ou poussé pour retirer le noyau (11) tressé avec des fibres de renforcement (12), dans lequel des fibres 0° sont introduites et une orientation des fibres triaxiale est obtenue dans une couche de fibres.

2. Procédé selon la revendication 1, **caractérisé en ce que** le noyau de tressage (11) présente une structure de forme annulaire et est formé à partir d'un matériau en mousse et/ou à partir de matériaux pouvant être dissous ou fondus.

3. Procédé selon la revendication 1 ou 2, **caractérisé en ce que** le noyau de tressage (11) est mis en rotation dans sa direction périphérique.

4. Procédé selon l'une quelconque des revendications 1 à 3, **caractérisé en ce que** le noyau de tressage (11) est tressé avec des fibres de renforcement (12) du groupe composé de fibres de carbone, de fibres d'aramide et de fibres de verre, de sorte que les fibres de renforcement (12) soient déposées le long de la périphérie du noyau de tressage et/ou soient déposées sous la forme de plusieurs couches de fibres de renforcement en continu le long de la direction d'avancée par rapport à l'anneau.

5. Procédé selon l'une quelconque des revendications 1 à 4, **caractérisé en ce que** les fibres de renforcement (12) sont déposées en périphérie et en moyenne par rapport à la section transversale annulaire.

6. Procédé selon l'une quelconque des revendications 1 à 5, **caractérisé en ce que** les bobines (2) tournent dans un composant de guidage (3) pouvant être déplié ou tournent dans un composant de guidage (3) pouvant être avancé par l'intermédiaire d'un système de rails.

7. Jante de bicyclette fabriquée selon le procédé selon l'une quelconque des revendications 1 à 6, dans laquelle le noyau tressé (11) est placé dans un moule, est soumise de manière avantageuse depuis l'extérieur à l'action d'une résine, la résine est durcie et une jante brute est retirée du moule après l'ouverture, dans laquelle de préférence la jante brute durcie est traitée ultérieurement par enlèvement de copeaux.

8. Jante de bicyclette selon la revendication 7, **caractérisée en ce que** la jante est produite avec des stratifils pré-imprégnés, des pré-imprégnés ou des bandelettes en matière thermoplastique préalablement consolidées directement sans fabrication supplémentaire d'un produit semi-fini plat.
